(19) Europäisches Patentamt / European Patent Office / Office européen des brevets

(11) **EP 2 994 773 B1**

(12) **EUROPEAN PATENT SPECIFICATION**

(45) Date of publication and mention of the grant of the patent:
**05.07.2023 Bulletin 2023/27**

(21) Application number: **14789868.8**

(22) Date of filing: **05.05.2014**

(51) International Patent Classification (IPC):
**G01S 13/88** $^{(2006.01)}$       **G01S 13/87** $^{(2006.01)}$

(52) Cooperative Patent Classification (CPC):
**G01S 13/885; G01S 13/874**

(86) International application number:
**PCT/IB2014/061213**

(87) International publication number:
**WO 2014/181240 (13.11.2014 Gazette 2014/46)**

(54) **DEVICE AND METHOD FOR DETECTING POSITION AND ORIENTATION OF UNDERGROUND ELONGATED BODIES**

VORRICHTUNG UND VERFAHREN ZUR BESTIMMUNG DER POSITION UND AUSRICHTUNG VON UNTERIRDISCHEN LANGGESTRECKTEN KÖRPERN

DISPOSITIF ET PROCÉDÉ POUR DÉTECTER LA POSITION ET L'ORIENTATION DE CORPS ALLONGÉS SOUTERRAINS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.05.2013 IT PI20130038**

(43) Date of publication of application:
**16.03.2016 Bulletin 2016/11**

(73) Proprietor: **IDS Georadar S.r.l.**
**20123 Milano (IT)**

(72) Inventors:
• **MANACORDA, Guido**
  **I-56123 Pisa (IT)**
• **MINIATI, Mario**
  **I-57100 Pisa (IT)**

(74) Representative: **Celestino, Marco**
  **ABM Agenzia Brevetti & Marchi,**
  **Viale Giovanni Pisano, 31**
  **56123 Pisa (IT)**

(56) References cited:
**DE-A1- 10 018 031**

• **GUIDO MANACORDA ET AL: "MAPPING UNDERGROUND ASSETS WITH FULLY INNOVATIVE GPR HARDWARE AND SOFTWARE TOOLS", THE NORTH AMERICAN SOCIETY (NASTT) AND THE INTERNATIONAL SOCIETY FOR TRENCHLESS TECHNOLOGY (ISTT) INTERNATIONAL NO-DIG SHOW 2009, 3 April 2009 (2009-04-03), XP055096850,**
• **RICHARD J YELF: "Application of Ground Penetrating Radar to Civil and Geotechnical Engineering", ELECTROMAGNETIC PHENOMENA, vol. 7, no. 1(18), 1 March 2007 (2007-03-01), pages 102-117, XP055096978, ISSN: 1562-2991**
• **"Ground Penetrating Radar for concrete scanning", CSDA Best Practice, 17 July 2009 (2009-07-17), pages 1-10, XP055097011, Retrieved from the Internet: URL:http://www.structurescan.ca/docs/CSDA-%20Ground-Penetrating-Radar-Best-Practices .pdf [retrieved on 2014-01-17]**
• **Mr Christopher ET AL: "Using Ground Penetrating Radar (GPR) with Multiple Pass Scans to Improve 3D Positional Reliability of Subterranean Features A dissertation submitted by", , 1 October 2009 (2009-10-01), XP055097152, Retrieved from the Internet: URL:http://eprints.usq.edu.au/8388/1/Arnis on_2009.pdf [retrieved on 2014-01-20]**

**Description**

Field of the invention

The present invention relates to a method for detecting, by means of GPR (Ground Penetrating Radar), underground ducts and for computing their lay direction.
Furthermore, the invention relates to an apparatus that carries out this method.

Description of the prior art

Inspecting devices are known that provide radio frequency energy for searching, by radar techniques, objects present in the underground, in walls of buildings, or in other hidden sites, with various applications in the fields of building engineering, geology, archaeology. These devices have the merit not to affect the physical, chemical and mechanical features of the structures and of the material that surround them.
In such devices, known as ground penetrating radars or with the acronyms GPR (Ground Penetrating Radar) or SPR (Surface Penetrating Radar), at least one antenna is provided for receiving/transmitting a radiofrequency (GPR sensor) and a remote control unit comprising a PC and an interface board with the or each antenna are also provided. The operation of these devices is typical of radars emitting an RF signal and analysing a return signal reflected by the objects hit by the emitted signal (echo). The GPR sensor is displaced on the surface of the target material, and, once started the transmission, the received return signals, suitably filtered, are generally displayed in the form of two-dimensional images, representing the amplitude versus time (ordinate) and of the space (abscissa) with respective coding colours.
The principles of operation of Ground Penetrating Radars are described for example in "Surface penetrating radar 2nd edition" by D. J. Daniels "The Institution of Electric Engineers, Stevenage (UK), 2004", or "IDS Radar Products For Utilities Mapping And Ground Classification" by Guido Manacorda "Proceedings of 20th International NO-DIG Impartence and Exhibition Copenhagen Denmark, May 28-31, 2002" available also in www.idscorporation.com.
Normally, the ground penetrating radars of the prior art, used in defining and mapping underground ducts and cable-ducts, are arranged for scanning along directions perpendicular to each other, i.e. defining a grid of measurement points. Such steps are long and difficult, but are necessary for determining the lay direction of buried objects whose direction is not known or it cannot be evaluated a priori. A ground penetrating radar is in fact capable of measuring precisely only ducts and underground cable-ducts with a lay direction perpendicular to the scanning direction. In this case, in fact, the position and the depth of the target are obtained by simply reading in the radar image the coordinates of a hyperbolic shape reflected by the duct or by the cable-duct.
In order to overcome this problem, some of the known ground penetrating radars use an array of GPR sensors, in order to speed up the inspection owing to the decrease of the number of scanning travels to carry out.
However, also in this case, the step of locating the lay direction of the buried objects is not immediate, but it is necessary to carry out many scanning travels to follow all the possible lay directions of the buried object.
In DE10018031A1, for example, a ground penetrating radar is described that uses two adjacent GPR antennas working alternately to each other. The two antennas are at a distance from each other along a line perpendicular to the travel direction of the ground penetrating radar. Furthermore, they are at an angle $\alpha$ for partially overlapping the trajectories of the two signals coming from the antennas, in order to follow the lay direction of the buried objects by comparing the two generated radar images with the data provided by the two antennas. According to DE10018031A1, in fact, by moving the antennas along the lay direction of the duct or cable-duct, the signal from it reflected returns to the ground penetrating radar with a delay substantially fixed and responsive to the distance between the antennas and the duct. Therefore, the trajectory is found moving the apparatus until the response time of the signals produced by the two antennas is minimum, corresponding to a position of the radar aligned vertically to the duct.
The device described in DE10018031A1 has a plurality of technical problems. Firstly, for detecting a duct it is necessary that the two antennas are at an angle $\alpha$ in such a way that the transmitted signals overlap when they meet each other at the depth of the duct. So, according to DE10018031A1, it is essential to know a priori the depth of the sought ducts and cable-ducts, and this often is not possible. Such aspect is already disadvantageous in case of a large duct laid at a fixed depth, but it is almost prohibitive when the duct changes the depth along its path.
Furthermore, the need of overlapping the signals at the duct prevents detecting ducts too close to the ground surface, since it would be necessary a too high angle $\alpha$ of inclination of the antennas.
Another drawback of the device presented in DE10018031A1 relates to the angle $\alpha$ that, as disclosed, changes between 5° and 16°. The angle at which the signals are transmitted with respect to a vertical direction causes a worsening of the amplitude of the received signal, when the duct is not struck by the main beam of the antenna but by a secondary lobe.
Finally, an unreliable detection of the direction of the pipes is caused by an impossibility of following exactly the direction of the duct during the travel of the ground penetrating radar. In fact, if the antennas detect a same signal, the radar is positioned symmetric with respect to the duct. If this symmetry is kept precisely, then the radar travel is directed parallel to the duct and aligned vertically to the same. In practice, however, it is not possible to keep such symmetry, since its precision is almost impossible to check. In particular, using antennas with a large beam of waves, as normally used in ground penetrating radars, the method would cause an unreliability in detecting the depth of the duct which is about half the distance between the antennas.

Summary of the invention

It is therefore a feature of the present invention to solve the above described technical problems present in the prior art.

It is also a feature of the present invention to provide a method that, by means of GPR technique (Ground Penetrating Radar) allows defining the lay direction of an elongated buried object carrying out a single scanning step.

It is also a feature of the present invention to provide a method for defining this lay direction in real time during the scanning.

It is a further feature of the present invention to provide a method for tracking an elongated buried object along all its lay direction, in order to determine possible changes of the lay direction.

It is still a feature of the present invention to provide a method for displaying said lay direction on a map referred to a global reference system and/or a local reference system.

It is also a feature of the present invention to provide a method for defining the duct lay direction in an automatic way and without the need for an expert staff.

It is a further feature of the present invention to provide an apparatus that carries out such method.

These and other objects are achieved by a method for defining a lay direction $\delta$ of at least one elongated buried object by means of GPR (Ground Penetrating Radar) technique according to claim 1.

The method according to the invention allows then defining the lay direction of an elongated buried object with a single scanning, by simply determining the spatial coordinates of points $P_1$ and $P_1$'.

In particular, the computing step can be carried out through a program means resident in the control unit, in such a way that the computing step is automatic and the step of locating the lay direction $\delta$ is carried out in real time during the scanning step.

Advantageously, the computing step comprises a step of computing an angle $\alpha$ set between a direction x orthogonal to the directions y and y' and an expected lay direction $\delta_1$ of the elongated object, said expected lay direction $\delta_1$ computed by comparison of a set of spatial coordinates of points $P_1$ and $P_1$' in which data have been detected relative to the presence of a same elongated buried object.

In particular, the method further comprises the steps of:

- positioning the apparatus in such a way that direction y is orthogonal to the expected lay direction $\delta_1$;
- iterating the steps of:

    - detecting the first plurality of presence signals;
    - determining the first set of spatial coordinates of each point P;
    - detecting the second plurality of presence signals;
    - determining the second set of spatial coordinates of each point P';
    - receiving the first and the second plurality of presence signals and the first and the second set of spatial coordinates;
    - computing angle $\alpha$;

    said step of iterating repeated until angle $\alpha$ is zero;

- identifying, when angle $\alpha$ is zero, of the expected lay direction $\delta_1$ as the actual lay direction $\delta$.

Such iterative process reduces effectively and with low computational burden possible any measurement errors occurred during the first detecting step of presence signals and/or the first step of determining the set of spatial coordinates.

Advantageously, in case the computing step is made through program means, a step is also provided of filtering and amplifying the first and the second plurality of presence signals, to allow a quicker and more precise identification of points $P_1$ and $P_1$'.

Advantageously, when the lay direction $\delta$ in an inspected zone has been identified, the method according to the invention provides a moving step where the apparatus is caused to translate laterally in a immediately next subsequent zone in order to check that this lay direction $\delta$ is the same as the previous zone or, alternatively, in order to determine the lay direction $\delta$ in the subsequent zone. Such step can be repeated many times, in order to follow the buried objects along all its lay direction.

In particular, in this moving step the apparatus in the inspected zone, direction y is kept orthogonal to the direction δ in the previous zone, in order to assist the comparison with the previous zone and determine easily the direction δ of the buried object in the inspected zone. The maintenance of the orthogonality between direction y and the lay direction δ can be facilitated, for example, by a navigation device.

In particular, the set of spatial coordinates of each point P is referred to a reference system selected from the group consisting of:

- a relative reference system having origin at said predetermined point P0;
- a global reference system;
- or a combination thereof.

In particular, the set of spatial coordinates of each point P' is referred to a reference system selected from the group consisting of:

- a relative reference system having origin at said predetermined point P0';
- a global reference system;
- or a combination thereof.

According to another aspect of the invention, an apparatus for defining a lay direction δ of at least one elongated buried object comprises a first GPR sensor configured to measure a first plurality of presence signals associated with data concerning the presence of at least one possible elongated buried object;
whose characteristic is that it further comprises:

- a second GPR sensor arranged integrally to the first GPR sensor in such a way that a connecting line between the first GPR sensor and the second GPR sensor defines a predetermined direction ε not parallel to the directions y and y', said second GPR sensor (110') configured to measure a second plurality of presence signals associated with data concerning the presence of at least one possible elongated buried object;
- at least one position sensor arranged to detect a first set of spatial coordinates for each point P of the trajectory s in which a presence signal of said first plurality is detected, said or each position sensor being also arranged to detect a second set of spatial coordinates for each point P' of the trajectory s' in which a presence signal of said second plurality is detected;
- a control unit arranged for receiving the first and the second plurality of presence signals by the first and by the second GPR sensor and each first and second set of spatial coordinates from said or each position sensor.

Advantageously, a program means is also comprised resident in the control unit and configured to analyse each first and second set of spatial coordinates and the data concerning the presence of possible elongated buried objects, said control unit being also configured for:

- determining, among all points P and P' at which a presence signal has been detected, points $P_1$ and $P_1$' at which the probability is higher of presence of said or each elongated buried object; and
- comparing said sets of spatial coordinates corresponding to points $P_1$ and $P_1$' with each other;
- determining, at the end of the control step, the lay direction δ of at least one elongated buried object responsive to the set of spatial coordinates corresponding to points $P_1$ and $P_1$'.

This way, the step of locating the lay direction δ is done in an automatic way and in real time, needing a single scanning.

In particular, the program means is also arranged to filter and amplify the presence signals, to allow a quicker and more precise identification of points $P_1$ and P1'

Advantageously, a navigation device is also provided, operatively connected to the control unit, and arranged to guide the first GPR sensor and the second GPR sensor in such a way that the directions y and y' turn out parallel or orthogonal to the lay direction δ of said or each elongated object. This way, the apparatus can determine easily the whole lay direction of said or each elongated object.

In particular, the navigation device is selected from the group consisting of:

- an analog compass;
- a digital compass;
- an accelerometer;

- a GPS device;
- a total station;
- a gyroscope;
- an inertial station;
- a combination thereof.

Advantageously, the navigation device is configured to guide the first GPR sensor and the second GPR sensor orthogonally to an expected lay direction $\delta_1$ and the program means is configured to determine, at the end of the computing step carried out by said program means, a lay direction $\delta$, and to check that it coincides with the expected lay direction $\delta_1$.

This way, it is possible to set an iterative process for improving the precision for defining the lay direction $\delta$, reducing effectively and quickly any measurement errors occurred during the first detecting step of presence signals and/or the first step of determining the set of spatial coordinates.

In particular, said or each position sensor is selected from the group consisting of:

- a rotational encoder;
- a metric wheel;
- a GPS device;
- a total station;
- a gyroscope;
- a GPS device;
- an inertial station;
- a measuring device of the travelled distance;
- a combination thereof.

In particular, the first and/or the second GPR sensor are selected from the group consisting of:

- an element type antenna (i.e. monopole, dipole, bow-tie, etc.);
- a "frequency independent" antenna (i.e. Logperiodic, spiral-shaped, Vivaldi, etc.);
- a horn antenna;
- an ultra-wide band non dispersive antenna (i.e. travelling wave antenna, travelling wave TEM horn, Impulse Radiating Antenna, rod antenna, etc.)
- a combination thereof.

Advantageously, a movable support is also provided arranged to support the first GPR sensor and the second GPR sensor to assist that said GPR sensors are moved integrally to each other.

In particular, the movable support is also arranged to support the other components of the apparatus.

Brief description of the drawings

Further characteristic and/or advantages of the invention will be made clearer with the following description of an embodiment thereof, exemplifying but not limitative, with reference to the attached drawings in which:

- Fig. 1 shows a possible exemplary embodiment of an apparatus, according to the invention, for defining a lay direction $\delta$ of at least one elongated buried object;
- Fig. 2 shows a step of moving the apparatus on a target surface;
- In Fig. 3 a step is shown of locating a first point P1 at which there is a high probability of presence of a buried object;
- In Fig. 4 a step is shown of locating a second point P1' at which there is a high probability of presence of a buried object, and subsequently defining an expected lay direction $\delta1$;
- In Fig. 5 a step is shown of further positioning apparatus 100 for testing the expected lay direction $\delta1$ of the buried object;
- In Fig. 6 a moving step is shown where the apparatus is caused to translate laterally in a immediately next subsequent zone to follow the lay direction of the buried object;
- In Fig. 7A examples are shown of measured presence signals, in case of $\alpha \neq 0$;
- In Fig. 7B examples are shown of measured presence signals, in case of $\alpha = 0$;
- In Fig. 8 a flow-sheet is shown which outlines various steps of the method for defining the lay direction $\delta$ of elongated buried objects, according to the invention.

Description of a preferred exemplary embodiment

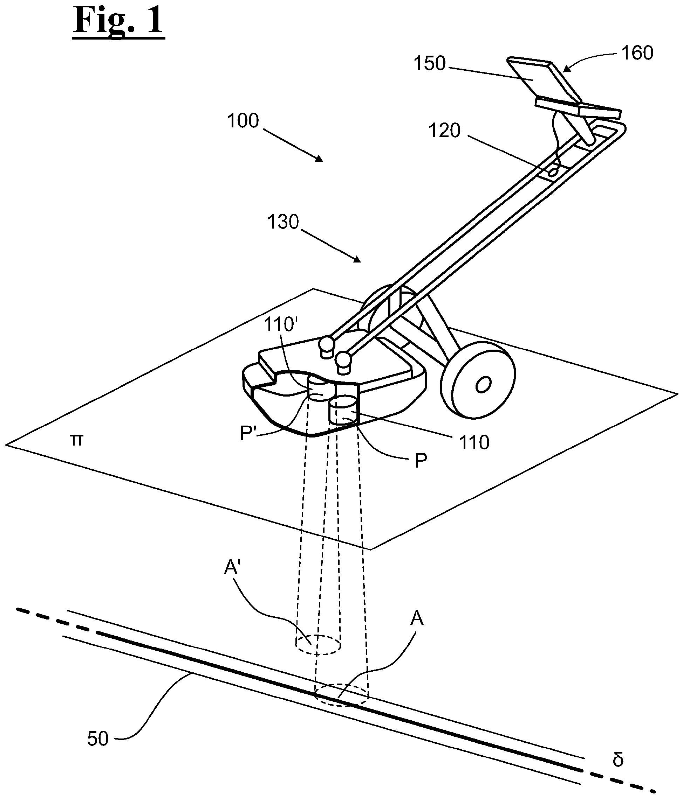

With reference to Fig. 1, a possible exemplary embodiment of an apparatus 100, according to the invention, for defining a lay direction δ of at least one elongated buried object 50 comprises a first and a second GPR sensor, 110 and 110', mounted to a movable support 130.

GPR sensors 110 and 110' allow to measure the presence of possible elongated buried objects by sending underground presence signals consisting of short high frequency electromagnetic pulses and then receiving back such signals.

Movable support 130, to which GPR sensors 110 and 110' are integral, assists moving apparatus 100 throughout a target area, and at the same time makes the GPR sensors integral to each other, so that they follow parallel trajectories during the step of detecting the signals.

In particular, assuming a plane π as the plane on which substantially the target area lays, and assuming the positions of GPR sensors 110 and 110' in this plane π respectively as points P and P', GPR sensors 110 and 110' can measure the presence of possible elongated buried objects, respectively at a first area A and of a second area A'. Such areas A and A' are defined, respectively, as a neighbourhood of the projections of points P and P' on elongated buried object 50, and are spatially different from each other. To movable support 130, in this exemplary embodiment, a control unit 150, in particular a computer, and a position sensor 120 are also connected.

To control unit 150 a navigation device 160 can be also connected, which is adapted, for example, to display a lay direction δ so that a user can follow the buried object along all its lay direction.

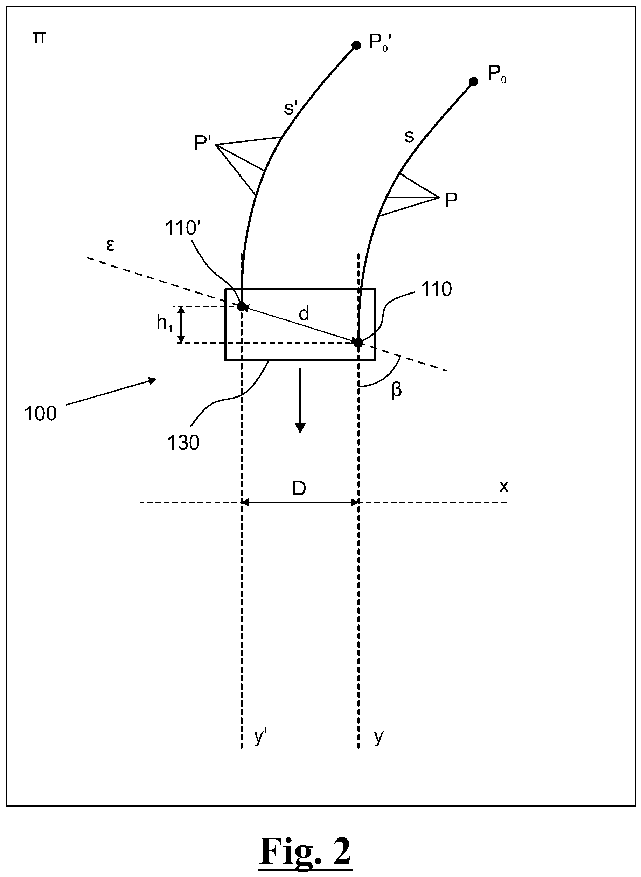

In figures 2,3,4,5,6 the successive steps of the method according to the invention are diagrammatically shown, for defining a lay direction δ of at least one elongated buried object 50.

With reference to Fig. 2, when apparatus 100 is moved on a target surface substantially parallel to plane π, the two GPR sensors 110 and 110' trace on this plane π two parallel trajectories s and s', consisting of two pluralities of points P and P' and have origin at points $P_0$ and $P_0'$. Furthermore, the two trajectories s and s' have as tangent lines, at each point, directions y and y'. Such directions y and y' are in turn parallel to each other, being the tangential lines to two trajectories parallel to each other, and are also parallel to the conveying direction all apparatus 100. The direction of movement is indicated by an arrow, located underneath apparatus 100.

Two GPR sensors 110 and 110' are integral to each other and located at a fixed distance d. A line that connects the two GPR sensors 110 and 110' has a predetermined direction ε, which forms, in each position of apparatus 100, an angle β not zero with direction y. The distance d has projection $h_1$ on direction y and a projection D on a direction x orthogonal to direction y and arranged also in plane π.

Simple trigonometric considerations allow to write the following relations:

$$h_1 = d*\cos(\beta)$$

$$D = d*\sin(\beta)$$

When moving apparatus 100 on the target surface, GPR sensors 110 and 110' detect continuatively presence signals that reproduce data relating to the presence of possible elongated buried objects. At the same time, position sensor 120 acquires a set of coordinates in plane π for each point P or P' in which a presence signal by GPR sensors 110 and 110' is detected. Each set of coordinates can be referred to a reference system having origin at $P_0$ or, alternatively to a global reference system. In the latter case, the position sensor could be, for example, a GPS sensor (Global Positioning System) based on a system of positioning satellites.

The acquired set of coordinates, along with the presence signals, are transmitted, in particular in real time, to control unit 150, which makes it possible a control by a user and/or by means of a software resident in the same control unit 150.

Owing to the acquisition of coordinates of the positions covered in turn by the two GPR sensors 110 and 110', the program means and/or the user are capable of determining the two trajectories s and s' travelled by the GPR sensors same, and then also the directions tangential to y and y' at each point.

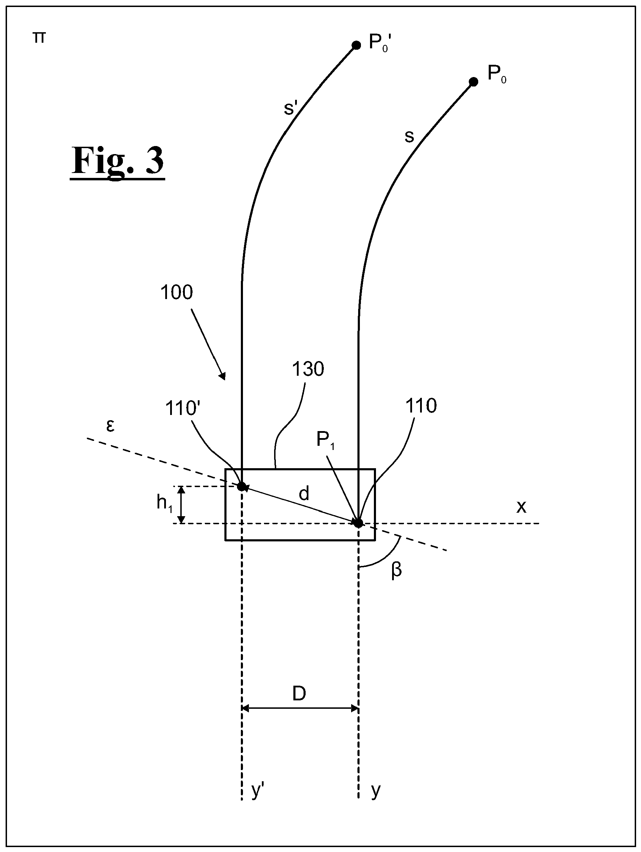

In Fig. 3 the instant is shown when one of the two GPR sensors 110 and 110' reveals the presence of a buried object.

Specifically, when control unit 150 receives the presence signals detected by first GPR sensor 110 at point $P_1$ and at adjacent points, the program means and/or the user compute such signals and detect point $P_1$ as the point at which there is a high probability of presence of a buried object. The coordinates of point $P_1$ in plane π have already been obtained by the actual position sensor 120, whereas the coordinate that provides the depth of the buried object at point $P_1$ is evaluated by the presence signal. It is therefore univocally determined spatially a first point of the lay direction of the elongated buried object.

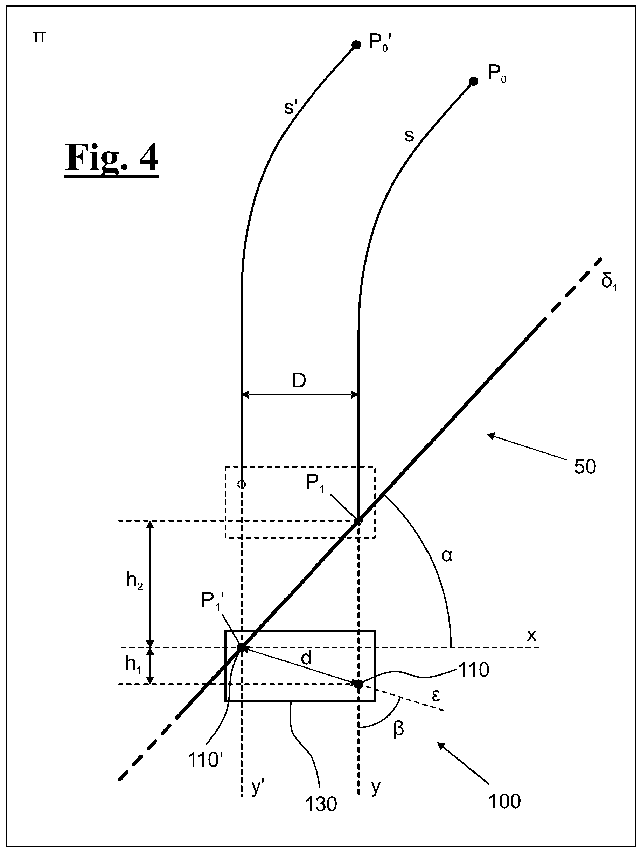

In Fig. 4 the moment is shown where the step of controlling the presence signals measured by the second sensor 110' allows locating point $P_1$' as point at which there is a high probability of presence of a buried object. Such step of processing the presence signals allows to determine both the depth of such object, if the buried object detected at point $P_1$' is the same detected at point $P_1$.

In case the object detected is the same, the expected lay direction $\delta_1$ of elongated buried object 50 can be determined, since for two points $P_1$ and $P_1$' a single straight line can pass. In particular, the expected lay direction $\delta_1$ is defined by computing an angle $\alpha$ between the above described direction $\delta_1$ and a direction x, orthogonal to the travel direction.

As it is apparent, except from the case in which direction $\delta_1$ is not exactly parallel to a connecting line between the sensors 110 and 110', the step of locating points $P_1$ and $P_1$' is carried out temporally different steps.

In simplified case of Fig. 4, where the conveying direction of apparatus 100 has been kept fixed in the short time between the steps of locating first point $P_1$ and of second point $P_1$', the expected lay direction $\delta_1$ is evaluated simply by determining the projection $h_2$ on y of segment $P_1 P_1$', i.e. by determining the distance travelled by apparatus 100 in said time.

In this case, in fact, angle $\alpha$ is evaluated, by means of simple trigonometric considerations, by the following equation:

$$\alpha = \tan^{-1}\left(\frac{\dfrac{d * \cos\beta + h_2}{d} - \cos\beta}{\sin\beta}\right)$$

wherein $\beta$ and d are known, and $h_2$ is the only variable value.

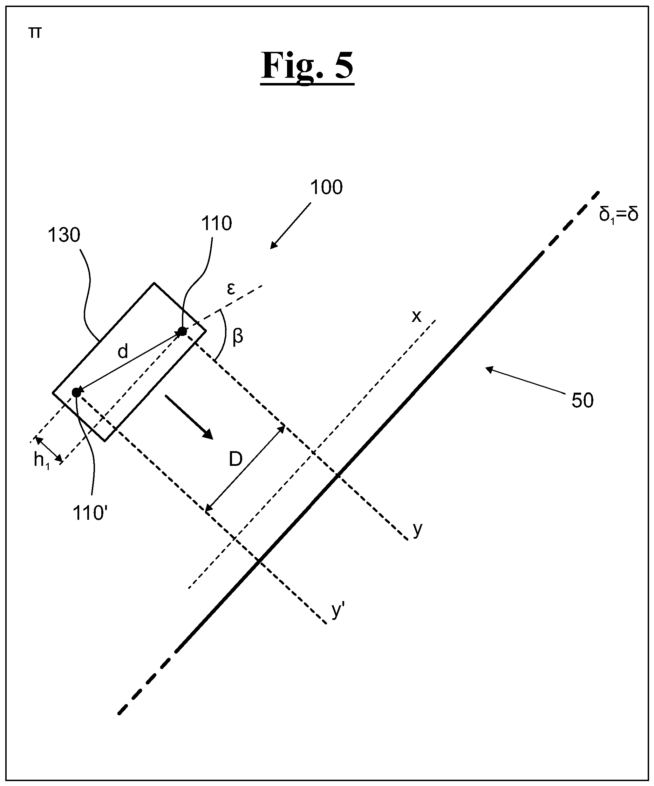

In Fig. 5 a step is shown of further positioning apparatus 100, for testing the expected lay direction $\delta_1$ of elongated buried object 50.

In particular, once an expected lay direction $\delta_1$ of the buried object 50 has been defined, apparatus 100 is positioned again in such a way that direction y is orthogonal to direction $\delta_1$. This can be made, in particular, by a navigation device 160, for example connected to control unit 150 (see Fig. 1).

The apparatus is then caused to travel along new direction y repeating the steps of detecting the presence signals, computing the coordinates and computing a presence record, up to calculating new $\alpha$ between the new direction x and a new expected lay direction $\delta_1$.

If this angle $\alpha$ is zero, then the new expected lay direction $\delta_1$ is confirmed as coincident with the expected lay direction $\delta_1$ calculated above and then assumed as the actual lay direction $\delta$, which is defined with respect to the reference system chosen above.

If instead angle $\alpha$ is not zero, and this can occur for example in case of measurement errors that result during the first estimation of $\delta_1$, then a further positioning and verification steps are carried out, giving rise substantially to an iterative process that ends when angle $\alpha$ calculated is eventually zero.

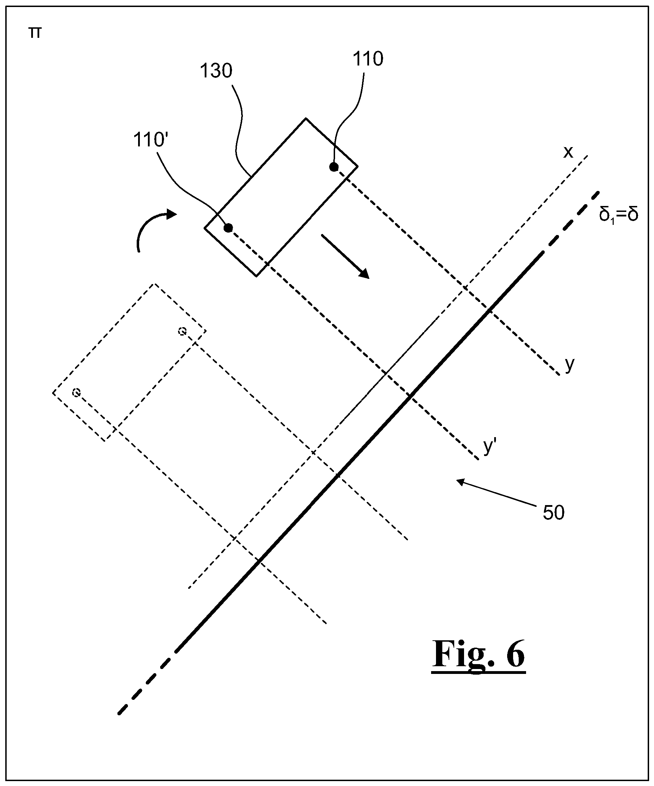

With reference to Fig. 6, when the lay direction $\delta$ in the inspected zone has been defined, the method according to the invention provides a moving step where apparatus 100 is caused to translate laterally in a immediately next subsequent zone in order to check that this lay direction $\delta$ is the same as the previous zone or, alternatively, in order to determine the lay direction $\delta$ in the inspected zone. Such step can be repeated many times, in order to follow the buried object 50 along all its lay direction.

In particular, while moving apparatus 100 in the inspected zone, direction y is kept orthogonal to the direction $\delta$ in the previous zone, in order to assist the comparison with the previous zone and determine easily the direction $\delta$ of the buried object 50 in the inspected zone.

In a possible exemplary embodiment, the lay direction $\delta$ can be displayed on a screen of the navigation device 160 (see Fig. 1), for example on a map oriented with respect to the conveying direction of apparatus 100. This way, a user can direct the movement of apparatus 100 and at the same time can display on the screen the lay direction defined up to that moment. Even in Figs. 2 to 6, both always shown the movable support 130, it is not necessary for the purpose of the operation of the present invention, since GPR sensors 110 and 110' can also be moved by means of other devices and/or manually by a user, without with this affecting the effect technical as claimed.

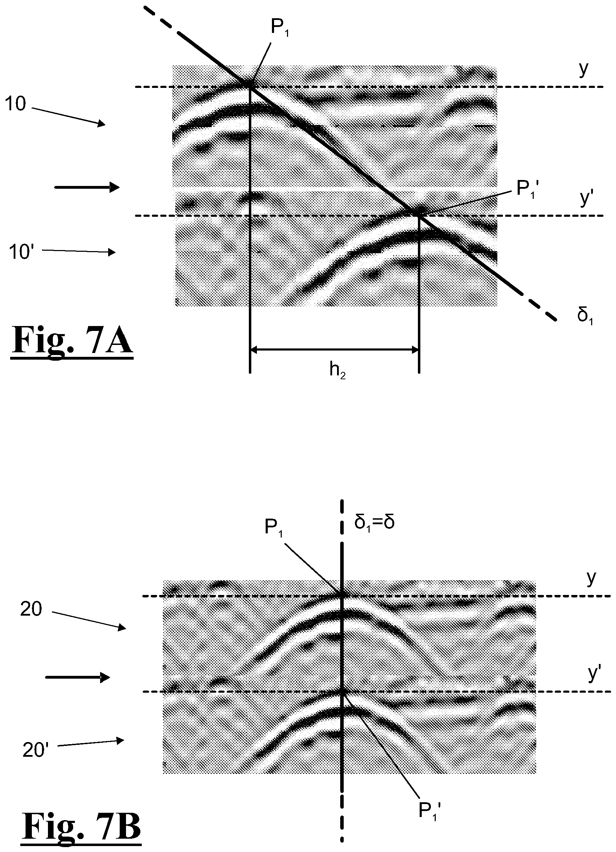

With reference to Figs. 7A and 7B, the presence signals detected by GPR sensors 110 and 110' can be displayed, for example, as branches of a hyperbole whose vertices correspond to the positions of the points, in particular $P_1$ and $P_1$', at which there is a high probability of presence of an elongated buried object.

In particular, Fig. 7A shows the displays 10 and 10' of the measured presence signals in a simplified case, like that of Fig. 4, where the conveying direction of apparatus 100 has been kept fixed, and parallel to direction y, in the time between the step of locating first point $P_1$ and of second point $P_1$'. The travel direction of moving apparatus 100 when detecting the presence signals is indicated by the arrow. Like Fig. 4, by projecting on y segment $P_1P_1$' the quantity $h_2$ is obtained, which is necessary to calculate angle $\alpha$ that defines the expected lay direction $\delta_1$ of elongated buried object 50.

Fig. 7B shows instead the displays 20 and 20' of the measured presence signals during a verification step, like that shown in Fig. 5, where apparatus 100 is moved along a direction y perpendicular to the expected lay direction $\delta_1$.

In particular, the case of Fig. 7B shows an alignment of the vertices of the two branches of hyperbole along the expected lay direction $\delta_1$. Such alignment causes zeroing the projection $h_2$ and therefore of angle $\alpha$, allowing the verification whether the expected lay direction $\delta_1$ coincides actually with the actual lay direction $\delta$ of the elongated buried object.

Both the step of locating the vertices of the branches of hyperbole, and therefore of points $P_1$ and $P_1$', and the correlation between two presence signals in order to assess whether they belong to a same buried object, are operations that can be carried out visually by a user, starting from the displays as shown in Figs. 7A and 7B.

Alternatively, for an automatization of the control step, a program means can be further provided in control unit 150. In this case, the step of determining the vertices can be done using an algorithm for recognizing the image that, starting from the above described displays, builds vectorial curves of which is possible, for example, to determine the maximum and/or minimum points.

Furthermore, the program means can carry out also a correlation between two presence signals by means, for example, of a pattern recognition filter and/or a image processing filter.

More in general, when the step of computing the presence signals is made through the program means, a step can also be provided of filtering and/or an amplifying such signals, for assisting the recognition and the correlation of the displayed images.

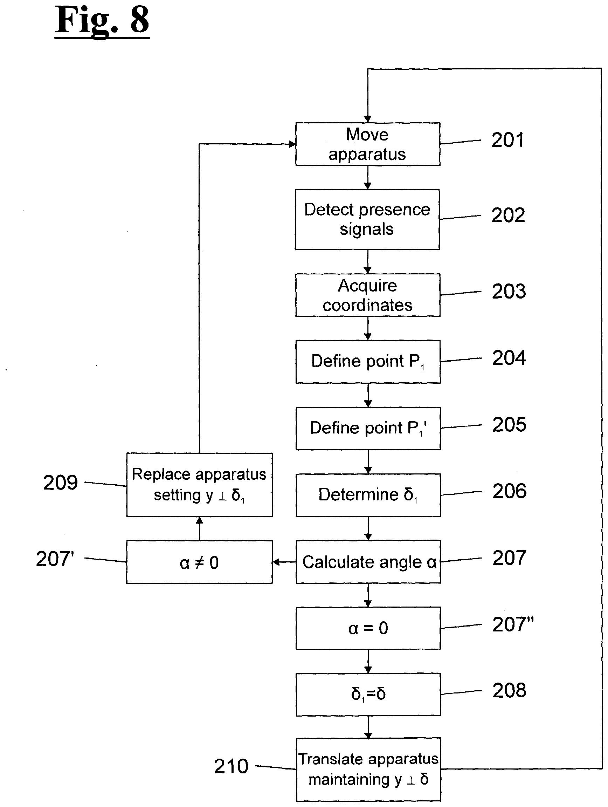

In Fig. 8 a flow-sheet is shown which outlines various steps of the method for defining the lay direction $\delta$ of elongated buried objects, according to the invention.

In particular, a step is provided of moving apparatus 100 on a target surface (201), during which GPR sensors 110 and 110' trace two trajectories s and s', thus detecting continuatively presence signals concerning the presence of possible buried objects (202). At the same time a position sensor 120 acquires the spatial coordinates, with respect to a absolute or relative reference system, of each point of trajectories s and s' at which a presence signal has been received (203).

The presence signals and the spatial coordinates are transmitted to a control unit 150, so that they can be computed by a user and/or by means of a software resident in the control unit same. The computing step allows to define a first point $P_1$ at which it is very probable the presence of a buried object 50 (204), and then to define a second point $P_1$' at which it is very probable the presence of the same buried object 50 (205).

By computing the line that passes through points $P_1$ and $P_1$' it is therefore possible to determine an expected lay direction $\delta_1$ of said buried object 50 (206), and then to calculate angle $\alpha$ between the direction x, orthogonal to the conveying direction of apparatus 100, and the above described direction $\delta_1$ (207).

Typically, angle $\alpha$ is not zero (207'), being casual the trajectory chosen when moving apparatus 100.

In this case, therefore, apparatus 100 is positioned again so that direction y, tangential to the trajectory of the apparatus, is perpendicular to the expected lay direction $\delta_1$ as previously defined. Such positioning movement can be made, for example, by means of a navigation device 160.

All the steps previously described (201-207), until angle $\alpha$ is zero (207") are then repeated. When angle $\alpha$ is zero, the last expected lay direction $\delta_1$ as calculated is confirmed as the actual lay direction $\delta$ (208).

At this point, apparatus 100 is caused to translate in a zone next to that previously inspected, maintaining direction y perpendicular to the direction $\delta$ previously detected (210).

## Claims

1. A method for defining a lay direction $\delta$ of at least one elongated buried object (50) by means of GPR technique, said method comprising the steps of:

   - moving a first GPR sensor (110) along a first trajectory s consisting of a plurality of points P, said first trajectory s having origin at a predetermined point $P_0$ and having as tangent line, at each point P of said plurality, a predetermined direction y;
   - moving a second GPR sensor (110'), integrally to said first GPR sensor (110), so that said second GPR sensor (110') travels along a second trajectory s' consisting of a plurality of points P', said second trajectory s' having origin at a predetermined point $P_0$' and being parallel to said first trajectory s, said second trajectory s' having as tangent line, at each point P' of said plurality, a predetermined direction y', said second GPR sensor (110') spatially arranged in such a way that a connecting line between said first GPR sensor (110) and said second GPR sensor (110') defines a predetermined direction $\varepsilon$ not parallel to said directions y and y';

- detecting a first plurality of presence signals by said first GPR sensor (110), each presence signal of said first plurality being detected at least at one point P of said first trajectory s, said first plurality of presence signals associated with data concerning the presence of at least one possible elongated buried object (50) at a first area (A) defined in a neighbourhood of a projection of said point P on said elongated buried object (50);
- determining a first set of spatial coordinates for each point P of said trajectory s in which a presence signal of said first plurality is detected;
- detecting a second plurality of presence signals by said second GPR sensor (110'), each presence signal of said second plurality being detected at least at one point P' of said second trajectory s', said second plurality of presence signals associated with data concerning the presence of at least one possible elongated buried object (50) at a second area (A') defined in a neighbourhood of a projection of said point P' on said elongated buried object (50), said or each second area (A') being spatially different from said or each first area (A);
- determining a second set of spatial coordinates for each point P' of said second trajectory s' in which a presence signal of said second plurality is detected;
- receiving by a control unit (150) said first and said second plurality of presence signals and each said first and said second set of spatial coordinates;
- computing said data concerning the presence of possible elongated buried objects (50) and of each said first and said second set of spatial coordinates, by:

  - determining, among all points P and P' at which a presence signal has been detected, points $P_1$ and $P_1$' at which the probability of presence of said or each elongated buried object (50) is higher;
  - comparing said sets of spatial coordinates corresponding to said points $P_1$ and $P_1$' with each other;

  - **characterised in that** it comprises the step of determining, at the end of said computing step, the lay direction $\delta$ of at least one elongated buried object (50) responsive to said set of spatial coordinates corresponding to said points $P_1$ and $P_1$'.

2. The method according to claim 1, wherein said computing step comprises a step of computing an angle $\alpha$ set between a direction x orthogonal to said directions y and y' and an expected lay direction $\delta_1$ of said or each elongated object (50), said expected lay direction $\delta_1$ computed by comparison of set of spatial coordinates of said points $P_1$ and $P_1$' in which data have been detected relative to the presence of a same elongated buried object (50).

3. The method according to claim 2, wherein the method further comprises the steps of:

   - further positioning said apparatus (100) in such a way that said direction y is orthogonal to said expected lay direction $\delta_1$;
   - iterating said steps of:

     - detecting said first plurality of presence signals;
     - determining said first set of spatial coordinates of each point P;
     - detecting said second plurality of presence signals;
     - determining said second set of spatial coordinates of each point P';
     - receiving said first and said second plurality of presence signals and of said first and said second set of spatial coordinates;
     - computing said angle $\alpha$;

   said step of iterating repeated until said angle $\alpha$ is zero;
   - identifying, when said angle $\alpha$ is zero, said expected lay direction $\delta_1$ as said lay direction $\delta$.

4. The method according to claim 1, wherein said set of spatial coordinates of each point P is referred to a reference system selected from the group consisting of:

   - a relative reference system having origin at said predetermined point $P_0$;
   - a global reference system;
   - or a combination thereof;
   - and wherein said set of spatial coordinates of each point P' is referred to a reference system selected from the group consisting of:

- a relative reference system having origin at said predetermined point $P_0$';
- a global reference system;
- or a combination thereof.

5. An apparatus (100) for defining a lay direction $\delta$ of at least one elongated buried object (50), said apparatus (100) comprising:

- a first GPR sensor (110) configured to measure a first plurality of presence signals associated with data concerning the presence of at least one possible elongated buried object (50);
- a second GPR sensor (110') arranged integrally to said first GPR sensor (110) in such a way that a connecting line between said first GPR sensor (110) and said second GPR sensor (110') defines a predetermined direction $\varepsilon$ not parallel to said directions y and y', said second GPR sensor (110') configured to measure a second plurality of presence signals associated with data concerning the presence of at least one possible elongated buried object (50) ;
- at least one position sensor (120) arranged to detect a first set of spatial coordinates for each point P of said trajectory s in which a presence signal of said first plurality is detected, said or each position sensor (120) being also arranged to detect a second set of spatial coordinates for each point P' of said second trajectory s' in which a presence signal of said second plurality is detected;
- a control unit (150) arranged for receiving said first and said second plurality of presence signals from said first and said second GPR sensor (110,110') and each said first and said second set of spatial coordinates from said or each position sensor (120);

said apparatus (100) having a program means that is comprised resident in said control unit (150) and configured in such a way to analyse each said first and said second set of spatial coordinates and said data concerning the presence of possible elongated buried objects (50), said control unit (150) being also configured for:

- determining, among all points P and P' at which a presence signal has been detected, points P1 and $P_1$' at which the probability is higher of presence of said or each elongated buried object (50); and
- comparing said sets of spatial coordinates corresponding to said points $P_1$ and $P_1$' with each other;

and **characterised in that** said control unit is configured for

- determining, at the end of said comparison, said lay direction $\delta$ of at least one elongated buried object (50) responsive to said set of spatial coordinates corresponding to said points $P_1$ and $P_1$'.

6. The apparatus (100) according to claim 5, wherein a navigation device (160) is also provided, operatively connected to said control unit (150), and arranged to guide said first GPR sensor (110) and said second GPR sensor (110') in such a way that said directions y and y' turn out parallel or orthogonal to said lay direction $\delta$ of said or each elongated object (50), in order to allow defining the whole lay direction of said or each elongated object (50),

7. The apparatus (100) according to claim 6, wherein said navigation device (160) is selected from the group consisting of:

- an analog compass;
- a digital compass;
- an accelerometer;
- a GPS device;
- a total station;
- a gyroscope;
- an inertial station;
- a combination thereof.

8. The apparatus (100) according to claims 5, 6 and 7, wherein said navigation device is configured in such a way to guide said first GPR sensor (110) and said second GPR sensor (110') orthogonally to an expected lay direction $\delta_1$ and said program means is configured to determine, at the end of said computing step carried out by said program means, a lay direction $\delta$, and to check that it coincides with said expected lay direction $\delta_1$.

9. The apparatus (100) according to claim 5, wherein said or each position sensor (120) is selected from the group consisting of:

- a rotational encoder;
- a metric wheel;
- a GPS device;
- a total station;
- a gyroscope;
- an inertial station;
- a measuring device of the travelled distance;
- a combination thereof;

and wherein said first and/or said second GPR sensor (110,110') is/are selected from the group consisting of:

- an element type antenna (i.e. monopole, dipole, bow-tie, etc.);
- an antenna of "frequency independent" type (i.e. Logperiodic, spiral-shaped, Vivaldi, etc.);
- a horn antenna;
- an ultra-wide band non dispersive antenna (i.e. travelling wave antenna, travelling wave TEM horn, Impulse Radiating Antenna, rod antenna, etc.)
- a combination thereof.

10. The apparatus (100) according to claim 5, wherein a movable support is also provided (130) arranged to support said first GPR sensor (110) and said second GPR sensor (110') to assist that said GPR sensors are moved integrally to each other.

**Patentansprüche**

1. Verfahren zum Definieren einer Lagerichtung $\delta$ von zumindest einem langgestreckten vergrabenen Objekt (50) mittels GPR-Technik, wobei das Verfahren die folgenden Schritte umfasst:

- Bewegen eines ersten GPR-Sensors (110) entlang einer ersten Trajektorie s, die aus einer Vielzahl von Punkten P besteht, wobei die erste Trajektorie s Ursprung an einem zuvor festgelegten Punkt $P_0$ aufweist und als Tangentenlinie an jedem Punkt P aus der Vielzahl eine zuvor festgelegte Richtung y aufweist;
- Bewegen eines zweiten GPR-Sensors (110'), einstückig mit dem ersten GPR-Sensor (110), sodass der zweite GPR-Sensor (110') entlang einer zweiten Trajektorie s' wandert, die aus einer Vielzahl von Punkten P' besteht, wobei die zweite Trajektorie s' Ursprung an einem zuvor festgelegten Punkt $P_0$' aufweist und parallel zu der ersten Trajektorie s ist, wobei die zweite Trajektorie s' als Tangentenlinie an jedem Punkt P' aus der Vielzahl eine zuvor festgelegte Richtung y' aufweist, wobei der zweite GPR-Sensor (110') räumlich auf eine solche Weise angeordnet ist, dass eine Verbindungslinie zwischen dem ersten GPR-Sensor (110) und dem zweiten GPR-Sensor (110') eine zuvor festgelegte Richtung $\varepsilon$ definiert, die nicht parallel zu den Richtungen y und y' ist,
- Bestimmen einer ersten Vielzahl von Anwesenheitssignalen durch den ersten GPR-Sensor (110), wobei jedes Anwesenheitssignal der ersten Vielzahl zumindest an einem Punkt P der ersten Trajektorie s bestimmt wird, wobei die erste Vielzahl von Anwesenheitssignalen Daten bezüglich der Anwesenheit von zumindest einem möglichen langgestreckten vergrabenen Objekt (50) in einem ersten Bereich (A) zugeordnet ist, der in einer Nachbarschaft einer Projektion des Punktes P an dem langgestreckten vergrabenen Objekt (50) definiert ist,
- Festlegen eines ersten Satzes von Raumkoordinaten für jeden Punkt P der Trajektorie s, in dem ein Anwesenheitssignal der ersten Vielzahl bestimmt wird,
- Bestimmen einer zweiten Vielzahl von Anwesenheitssignalen durch den zweiten GPR-Sensor (110'), wobei jedes Anwesenheitssignal der zweiten Vielzahl zumindest an einem Punkt P' der zweiten Trajektorie s' bestimmt wird, wobei die zweite Vielzahl von Anwesenheitssignalen Daten bezüglich der Anwesenheit von zumindest einem möglichen langgestreckten vergrabenen Objekt (50) in einem zweiten Bereich (A') zugeordnet ist, der in einer Nachbarschaft einer Projektion des Punktes P' an dem langgestreckten vergrabenen Objekt (50) definiert ist, wobei sich der oder jeder zweite Bereich (A') räumlich von dem oder jedem ersten Bereich (A) unterscheidet;
- Festlegen eines zweiten Satzes von Raumkoordinaten für jeden Punkt P' der zweiten Trajektorie s', in dem ein Anwesenheitssignal aus der zweiten Vielzahl bestimmt wird,
- Empfangen, durch eine Steuereinheit (150), der ersten und der zweiten Vielzahl von Anwesenheitssignalen und von jedem von dem ersten und dem zweiten Satz von Raumkoordinaten,

- Berechnen der Daten bezüglich der Anwesenheit von möglichen langgestreckten vergrabenen Objekten (50) und von jedem von dem ersten und dem zweiten Satz von Raumkoordinaten durch:

- Festlegen, unter allen Punkten P und P', an denen ein Anwesenheitssignal bestimmt worden ist, von Punkten $P_1$ und $P_1'$, an denen die Wahrscheinlichkeit von Anwesenheit des oder jedes langgestreckten vergrabenen Objekts (50) höher ist,
- Vergleichen der Sätze von Raumkoordinaten, die den Punkten $P_1$ und $P_1'$ entsprechen, miteinander;

- **dadurch gekennzeichnet, dass** es den Schritt des Festlegens, an dem Ende des Berechnungsschrittes, der Lagerichtung δ von zumindest einem langgestreckten vergrabenen Objekt (50) als Reaktion darauf umfasst, dass der Satz von Raumkoordinaten den Punkten $P_1$ und $P_1'$ entspricht.

2. Verfahren nach Anspruch 1, wobei der Berechnungsschritt einen Schritt des Berechnens eines Winkels α, der zwischen einer Richtung x orthogonal zu den Richtungen y und y' eingestellt ist, und einer erwarteten Lagerichtung $δ_1$ des oder jedes langgestreckten Objekts (50) umfasst, wobei die erwartete Lagerichtung $δ_1$ durch Vergleich des Satzes von Raumkoordinaten der Punkte $P_1$ und $P_1'$ berechnet wird, in denen Daten relativ zu der Anwesenheit eines gleichen langgestreckten vergrabenen Objekts (50) bestimmt worden sind.

3. Verfahren nach Anspruch 2, wobei das Verfahren ferner die folgenden Schritte umfasst:

- weiteres Positionieren der Vorrichtung (100) auf eine solche Weise, dass die Richtung y orthogonal zu der erwarteten Lagerichtung $δ_1$ ist,
- Iterieren der folgenden Schritte:

- Bestimmen der ersten Vielzahl von Anwesenheitssignalen;
- Festlegen des ersten Satzes von Raumkoordinaten von jedem Punkt P;
- Bestimmen der zweiten Vielzahl von Anwesenheitssignalen;
- Festlegen des zweiten Satzes von Raumkoordinaten von jedem Punkt P';
- Empfangen der ersten und der zweiten Vielzahl von Anwesenheitssignalen und des ersten und des zweiten Satzes von Raumkoordinaten;
- Berechnen des Winkels α;
wobei der Schritt des Iterierens wiederholt wird, bis der Winkel α Null ist,

- Identifizieren, wenn der Winkel α Null ist, der erwarteten Lagerichtung $δ_1$ als die Lagerichtung δ.

4. Verfahren nach Anspruch 1, wobei der Satz von Raumkoordinaten von jedem Punkt P auf ein Referenzsystem bezogen ist, das ausgewählt ist aus der Gruppe bestehend aus:

- einem relativen Referenzsystem, das Ursprung an dem zuvor festgelegten Punkt $P_0$ aufweist;
- einem globalen Referenzsystem,
- oder einer Kombination davon;
- und wobei der Satz von Raumkoordinaten von jedem Punkt P' auf ein Referenzsystem bezogen ist, das ausgewählt ist aus der Gruppe bestehend aus:

- einem relativen Referenzsystem, das Ursprung an dem zuvor festgelegten Punkt $P_0'$ aufweist;
- einem globalen Referenzsystem,
- oder einer Kombination davon.

5. Vorrichtung (100) zum Definieren einer Lagerichtung δ von zumindest einem langgestreckten vergrabenen Objekt (50), wobei die Vorrichtung (100) Folgendes umfasst:

- einen ersten GPR-Sensor (110), der konfiguriert ist, um eine erste Vielzahl von Anwesenheitssignalen zu messen, die Daten bezüglich der Anwesenheit von zumindest einem möglichen langgestreckten vergrabenen Objekt (50) zugeordnet sind;
- einen zweiten GPR-Sensor (110'), der einstückig mit dem ersten GPR-Sensor (110) auf eine solche Weise angeordnet ist, dass eine Verbindungslinie zwischen dem ersten GPR-Sensor (110) und dem zweiten GPR-Sensor (110') eine zuvor festgelegte Richtung ε definiert, die nicht parallel zu den Richtungen y und y' ist, wobei der zweite GPR-Sensor (110') konfiguriert ist, um eine zweite Vielzahl von Anwesenheitssignalen zu messen, die Daten bezüglich der Anwesenheit von zumindest einem möglichen langgestreckten vergrabenen Objekt (50) zugeordnet ist,

- zumindest einen Positionssensor (120), der angeordnet ist, um einen ersten Satz von Raumkoordinaten für jeden Punkt P der Trajektorie s zu bestimmen, in dem ein Anwesenheitssignal der ersten Vielzahl bestimmt wird, wobei der oder jeder Positionssensor (120) auch angeordnet ist, um einen zweiten Satz von Raumkoordinaten für jeden Punkt P' der zweiten Trajektorie s' zu bestimmen, in dem ein Anwesenheitssignal der zweiten Vielzahl bestimmt wird,

- eine Steuereinheit (150), die zum Empfangen der ersten und der zweiten Vielzahl von Anwesenheitssignalen von dem ersten und dem zweiten GPR-Sensor (110, 110') und jedem von dem ersten und dem zweiten Satz von Raumkoordinaten von dem oder jedem Positionssensor (120) angeordnet ist,

wobei die Vorrichtung (100) ein Programmmittel aufweist, das befindlich in der Steuereinheit (150) umfasst und auf eine solche Weise konfiguriert ist, dass es jeden ersten und zweiten Satz von Raumkoordinaten und die Daten bezüglich der Anwesenheit von möglichen langgestreckten vergrabenen Objekten (50) analysiert, wobei die Steuereinheit (150) auch für Folgendes konfiguriert ist:

- Festlegen, unter allen Punkten P und P', an denen ein Anwesenheitssignal bestimmt worden ist, von Punkten P1 and $P_1'$, an denen die Wahrscheinlichkeit von Anwesenheit des oder jedes langgestreckten vergrabenen Objekts (50) höher ist; und

- Vergleichen der Sätze von Raumkoordinaten, die den Punkten $P_1$ und $P_1'$ entsprechen, miteinander;

und **dadurch gekennzeichnet, dass** die Steuereinheit für Folgendes konfiguriert ist zum

- Festlegen, an dem Ende des Vergleichs, der Lagerichtung $\delta$ von zumindest einem langgestreckten vergrabenen Objekt (50) als Reaktion darauf, dass der Satz von Raumkoordinaten den Punkten $P_1$ und $P_1'$ entspricht.

6. Vorrichtung (100) nach Anspruch 5, wobei auch ein Navigationsgerät (160) bereitgestellt ist, das mit der Steuereinheit (150) wirkverbunden und angeordnet ist, um den ersten GPR-Sensor (110) und den zweiten GPR-Sensor (110') auf eine solche Weise zu führen, dass die Richtungen y und y' parallel oder orthogonal zu der Lagerichtung $\delta$ des oder jedes langgestreckten Objekts (50) verlaufen, um zu ermöglichen, dass die gesamte Lagerichtung des oder jedes langgestreckten Objekts (50) definiert wird.

7. Vorrichtung (100) nach Anspruch 6, wobei das Navigationsgerät (160) ausgewählt ist aus der Gruppe bestehend aus:

- einem analogen Kompass;
- einem digitalen Kompass;
- einem Beschleunigungsmesser;
- einem GPS-Gerät;
- einer Totalstation;
- einem Gyroskop;
- einer Trägheitsstation;
- einer Kombination davon.

8. Vorrichtung (100) nach Anspruch 5, 6 und 7, wobei das Navigationsgerät auf eine solche Weise konfiguriert ist, dass es den ersten GPR-Sensor (110) und den zweiten GPR-Sensor (110') orthogonal zu einer erwarteten Lagerichtung $\delta_1$ führt und das Programmmittel konfiguriert ist, um an dem Ende des Berechnungsschrittes, der durch das Programmmittel durchgeführt wird, eine Lagerichtung $\delta$ festzulegen und um zu prüfen, ob sie mit der erwarteten Lagerichtung $\delta_1$ übereinstimmt.

9. Vorrichtung (100) nach Anspruch 5, wobei der oder jeder Positionssensor (120) ausgewählt ist aus der Gruppe bestehend aus:

- einem Drehcodierer;
- einem metrischen Rad;
- einem GPS-Gerät;
- einer Totalstation;
- einem Gyroskop;
- einer Trägheitsstation;

- einem Messgerät für die zurückgelegte Strecke;
- einer Kombination davon;

und wobei der erste und/oder der zweite GPR-Sensor (110, 110') ausgewählt ist/sind aus der Gruppe bestehend aus:

- einer Elementtypantenne (d. h. Monopol, Dipol, Bowtie usw.);
- einer Antenne vom "frequenzunabhängigen" Typ (d. h. logperiodisch, spiralförmig, Vivaldi usw.);
- einer Hornantenne;
- einer nicht dispersiven Ultrabreitbandantenne (d. h. Wanderwellenantenne, Wanderwellen-TEM-Horn, Impulsstrahlungsantenne, Stabantenne usw.)
- einer Kombination davon.

**10.** Vorrichtung (100) nach Anspruch 5, wobei auch eine bewegbare Stütze bereitgestellt (130) ist, die angeordnet ist, um den ersten GPR-Sensor (110) und den zweiten GPR-Sensor (110') zu stützen, um dabei zu helfen, dass die GPR-Sensoren einstückig miteinander bewegt werden.


**Revendications**

**1.** Procédé permettant de définir une direction de pose $\delta$ d'au moins un objet allongé enfoui (50) au moyen de la technique GPR, ledit procédé comprenant les étapes de :

- déplacement d'un premier capteur GPR (110) le long d'une première trajectoire s constituée d'une pluralité de points P, ladite première trajectoire s possédant une origine au niveau d'un point $P_0$ prédéfini et possédant en tant que ligne tangente, au niveau de chaque point P de ladite pluralité, une direction prédéfinie y ;
- déplacement d'un second capteur GPR (110'), d'un seul tenant avec ledit premier capteur GPR (110), afin que ledit second capteur GPR (110') se déplace le long d'une seconde trajectoire s' constituée d'une pluralité de points P', ladite seconde trajectoire s' possédant une origine au niveau d'un point prédéfini $P_0'$ et étant parallèle à ladite première trajectoire s, ladite seconde trajectoire s' possédant en tant que ligne tangente, en chaque point P' de ladite pluralité, une direction prédéfinie y', ledit second capteur GPR (110') agencé spatialement d'une façon telle qu'une ligne de liaison entre ledit premier capteur GPR (110) et ledit second capteur GPR (110') définit une direction prédéfinie $\varepsilon$ non parallèle auxdites directions y et y' ;
- détection d'une première pluralité de signaux de présence par ledit premier capteur GPR (110), chaque signal de présence de ladite première pluralité étant détecté au moins au niveau d'un point P de ladite première trajectoire s, ladite première pluralité de signaux de présence étant associée à des données concernant la présence d'au moins un possible objet allongé enfoui (50) au niveau d'une première zone (A) définie dans le voisinage d'une projection dudit point P sur ledit objet allongé enfoui (50) ;
- détermination d'un premier ensemble de coordonnées spatiales pour chaque point P de ladite trajectoire s dans lequel un signal de présence de ladite première pluralité est détecté ;
- détection d'une seconde pluralité de signaux de présence par ledit second capteur GPR (110'), chaque signal de présence de ladite seconde pluralité étant détecté au moins au niveau d'un point P' de ladite seconde trajectoire s', ladite seconde pluralité de signaux de présence étant associés à des données concernant la présence d'au moins un possible objet allongé enfoui (50) au niveau d'une seconde zone (A') définie dans le voisinage d'une projection dudit point P' sur ledit objet allongé enfoui (50), ladite ou chaque seconde zone (A') étant spatialement différente de ladite ou de chaque première zone (A) ;
- détermination d'un second ensemble de coordonnées spatiales pour chaque point P' de ladite seconde trajectoire s' dans lequel un signal de présence de ladite seconde pluralité est détecté ;
- réception par une unité de commande (150) de ladite première et de ladite seconde pluralité de signaux de présence et de chacun dudit premier et dudit second ensemble de coordonnées spatiales ;
- calcul desdites données concernant la présence de possibles objets allongés enfouis (50) et de chacun desdits premier et second ensembles de coordonnées spatiales, par :

  - la détermination, parmi tous les points P et P' au niveau desquels un signal de présence a été détecté, des points $P_1$ et $P_1'$ au niveau desquels la probabilité de présence dudit ou de chaque objet allongé enfoui (50) est plus élevée ;
  - la comparaison desdits ensembles de coordonnées spatiales correspondant auxdits points $P_1$ et $P_1'$ entre eux ;

- **caractérisé en ce qu'**il comprend l'étape de détermination, à l'issue de ladite étape de calcul, de la direction de pose δ d'au moins un objet allongé enfoui (50) en réponse audit ensemble de coordonnées spatiales correspondant auxdits points $P_1$ et $P_1$'.

2. Procédé selon la revendication 1, ladite étape de calcul comprenant une étape de calcul d'un angle α établi entre une direction x orthogonale auxdites directions y et y', et une direction de pose attendue $δ_1$ dudit ou de chaque objet allongé (50), ladite direction de pose attendue $δ_1$ étant calculée par comparaison d'un ensemble de coordonnées spatiales desdits points $P_1$ et $P_1$' dans lesquels ont été détectées des données relatives à la présence d'un même objet allongé enfoui (50).

3. Procédé selon la revendication 2, ledit procédé comprenant en outre les étapes de :

   - positionnement en outre dudit appareil (100) d'une façon telle que ladite direction y est orthogonale à ladite direction de pose attendue $δ_1$ ;
   - itération desdites étapes de :

      - détection de ladite première pluralité de signaux de présence ;
      - détermination dudit premier ensemble de coordonnées spatiales de chaque point P;
      - détection de ladite seconde pluralité de signaux de présence ;
      - détermination dudit second ensemble de coordonnées spatiales de chaque point P' ;
      - réception de ladite première et de ladite seconde pluralité de signaux de présence et dudit premier et dudit second ensemble de coordonnées spatiales ;
      - calcul dudit angle α ;
      ladite étape d'itération étant répétée jusqu'à ce que ledit angle α soit nul ;

   - identification, lorsque ledit angle α est nul, de ladite direction de pose attendue $δ_1$ en tant que ladite direction de pose δ.

4. Procédé selon la revendication 1, ledit ensemble de coordonnées spatiales de chaque point P étant repéré par rapport au référentiel choisi dans le groupe constitué par :

   - un référentiel relatif possédant pour origine ledit point prédéfini $P_0$ ;
   - un référentiel mondial ;
   - ou une combinaison de ceux-ci ;
   - et ledit ensemble de coordonnées spatiales de chaque point P' étant repéré par rapport à un référentiel choisi dans le groupe constitué par :

      - un référentiel relatif possédant pour origine ledit point prédéfini $P_0$' ;
      - un référentiel mondial ;
      - ou une combinaison de ceux-ci.

5. Appareil (100) destiné à définir une direction de pose δ d'au moins un objet allongé enfoui (50), ledit appareil (100) comprenant :

   - un premier capteur GPR (110) configuré pour mesurer une première pluralité de signaux de présence associés à des données concernant la présence d'au moins un possible objet allongé enfoui (50) ;
   - un second capteur GPR (110') agencé d'un seul tenant par rapport audit premier capteur GPR (110) d'une façon telle qu'une ligne de liaison entre ledit premier capteur GPR (110) et ledit second capteur GPR (110') définit une direction prédéfinie ε non parallèle auxdites directions y et y', ledit second capteur GPR (110') étant configuré pour mesurer une seconde pluralité de signaux de présence associés à des données concernant la présence d'au moins un possible objet allongé enfoui (50) ;
   - au moins un capteur de position (120) agencé pour détecter un premier ensemble de coordonnées spatiales pour chaque point P de ladite trajectoire s dans lequel un signal de présence de ladite première pluralité est détecté, ledit ou chaque capteur de position (120) étant également agencé pour détecter un second ensemble de coordonnées spatiales pour chaque point P' de ladite seconde trajectoire s' dans lequel un signal de présence de ladite seconde pluralité est détecté ;
   - une unité de commande (150) agencée pour recevoir ladite première et ladite seconde pluralité de signaux de présence en provenance dudit premier et dudit second capteur GPR (110, 110') et chacun dudit premier et dudit second ensemble de coordonnées spatiales en provenance dudit ou de chaque capteur de position (120) ; ledit appareil (100) possédant un moyen de programme qui est compris en tant que résident dans ladite unité de commande (150) et configuré d'une façon telle qu'il analyse chacun dudit premier et dudit second ensemble de coordonnées spatiales et lesdites données concernant la présence de possibles objets allongés enfouis (50), ladite unité de commande (150) étant également configurée pour :

- déterminer, parmi tous les points P et P' au niveau desquels un signal de présence a été détecté, les points P1 et $P_1'$ au niveau desquels la probabilité de présence dudit ou de chaque objet allongé enfoui (50) est plus élevée ; et
- la comparaison desdits ensembles de coordonnées spatiales correspondant auxdits points $P_1$ et $P_1'$ entre eux ;

et **caractérisé en ce que** ladite unité de commande est configurée pour

- déterminer, à l'issue de ladite comparaison, ladite direction de pose δ d'au moins un objet allongé enfoui (50) en réponse audit ensemble de coordonnées spatiales correspondant auxdits points $P_1$ et $P_1'$.

6. Appareil (100) selon la revendication 5, un dispositif de navigation (160) étant également prévu, connecté fonctionnellement à ladite unité de commande (150), et agencé pour guider ledit premier capteur GPR (110) et ledit second capteur GPR (110') d'une façon telle que lesdites directions y et y' s'avèrent parallèles ou orthogonales à ladite direction de pose δ dudit ou de chaque objet allongé (50), afin de permettre de définir l'entière direction de pose dudit ou de chaque objet allongé (50).

7. Appareil (100) selon la revendication 6, ledit dispositif de navigation (160) étant choisi dans le groupe constitué par :

- une boussole analogique ;
- une boussole numérique ;
- un accéléromètre ;
- un dispositif GPS ;
- une station totale ;
- un gyroscope ;
- une centrale inertielle ;
- une combinaison de ceux-ci.

8. Appareil (100) selon les revendications 5, 6 et 7, ledit dispositif de navigation étant configuré d'une façon telle qu'il guide ledit premier capteur GPR (110) et ledit second capteur GPR (110') orthogonalement à une direction de pose attendue $δ_1$ et ledit moyen de programme étant configuré pour déterminer, à l'issue de ladite étape de calcul effectuée par ledit moyen de programme, une direction de pose δ, et pour vérifier qu'elle coïncide avec ladite direction de pose attendue $δ_1$.

9. Appareil (100) selon la revendication 5, ledit ou chaque capteur de position (120) étant choisi dans le groupe constitué par :

- un codeur rotatif ;
- une roue métrique ;
- un dispositif GPS ;
- une station totale ;
- un gyroscope ;
- une centrale inertielle ;
- un dispositif de mesure de la distance parcourue ;
- une combinaison de ceux-ci ;

et ledit premier et/ou ledit second capteur GPR (110, 110') étant choisis dans le groupe constitué par :

- une antenne de type élément (c'est à dire monopôle, dipôle, papillon, etc.) ;
- une antenne de type « indépendant de la fréquence » (c'est-à-dire log-périodique, spiralée, Vivaldi, etc.) ;
- une antenne cornet ;
- une antenne non dispersive à bande ultra large (c'est-à-dire une antenne à ondes progressives, un cornet TEM à ondes progressives, une antenne rayonnante à impulsions, une antenne tige, etc.)
- une combinaison de ceux-ci.

10. Appareil (100) selon la revendication 5, un support mobile étant également prévu (130) agencé pour supporter ledit premier capteur GPR (110) et ledit second capteur GPR (110') pour aider à ce que lesdits capteurs GPR soient déplacés d'un seul tenant l'un par rapport à l'autre.

# Fig. 1

**Fig. 2**

**Fig. 3**

**Fig. 4**

# Fig. 5

**Fig. 6**

**Fig. 7A**

**Fig. 7B**

# Fig. 8

```
                          ┌──────────────┐
                          │    Move      │────── 201
                          │  apparatus   │
                          └──────┬───────┘
                                 ▼
                          ┌──────────────┐
                          │Detect presence│───── 202
                          │   signals    │
                          └──────┬───────┘
                                 ▼
                          ┌──────────────┐
                          │   Acquire    │────── 203
                          │ coordinates  │
                          └──────┬───────┘
                                 ▼
                          ┌──────────────┐
                          │Define point P₁│───── 204
                          └──────┬───────┘
                                 ▼
                          ┌──────────────┐
                          │Define point P₁'│──── 205
                          └──────┬───────┘
┌──────────────┐          ┌──────────────┐
│Replace apparatus│ 209 ── │ Determine δ₁ │──── 206
│ setting y ⊥ δ₁ │        └──────┬───────┘
└──────▲───────┘                 ▼
┌──────────────┐          ┌──────────────┐
207'──│   α ≠ 0      │◄───│Calculate angle α│── 207
      └──────────────┘    └──────┬───────┘
                                 ▼
                          ┌──────────────┐
                          │    α = 0     │────── 207"
                          └──────┬───────┘
                                 ▼
                          ┌──────────────┐
                          │    δ₁ = δ     │───── 208
                          └──────┬───────┘
                                 ▼
                          ┌──────────────┐
              210 ────────│Translate apparatus│─ 
                          │maintaining y ⊥ δ│
                          └──────────────┘
```

**Move apparatus** — 201

**Detect presence signals** — 202

**Acquire coordinates** — 203

**Define point $P_1$** — 204

**Define point $P_1'$** — 205

209 — **Replace apparatus setting $y \perp \delta_1$**     **Determine $\delta_1$** — 206

207' — **$\alpha \neq 0$**     **Calculate angle $\alpha$** — 207

**$\alpha = 0$** — 207"

**$\delta_1 = \delta$** — 208

210 — **Translate apparatus maintaining $y \perp \delta$**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10018031 A1

**Non-patent literature cited in the description**

- The Institution of Electric Engineers, Stevenage (UK). **D. J. DANIELS.** Surface penetrating radar. 2004

- **GUIDO MANACORDA.** IDS Radar Products For Utilities Mapping And Ground Classification. *Proceedings of 20th International NO-DIG Impartence and Exhibition Copenhagen Denmark,* 28 May 2002, www.idscorporation.com